# EUROPEAN PATENT APPLICATION

(11) **EP 1 217 515 A1**
(43) Date of publication of application: **26.06.2002**
(21) Application number: 00128348.0
(22) Date of filing: 22.12.2000
(51) Int. Cl.: G06F 9/44

(54) **Workflow system**

(71) Applicant: LION bioscience AG, 69120 Heidelberg (DE)
(72) Inventor: Etzold, Thure, Cambridge CB1 2DZ (GB); Uludag, Mahmut, Cambridge CB4 3JU (GB)
(74) Representative: Betten & Resch

(57) **Abstract**

A method for executing a task to be carried out by one or more computer systems through a workflow scheme representing said task, wherein said task is represented by a set of workflow items, each workflow item representing an action, each workflow item receiving one or more inputs from other workflow items and delivering one or more outputs to other workflow items, thereby forming a workflow representation of said task, said method comprising: identifying a workflow item delivering as an output the desired result of said task; tracing the workflow representation to identify all other workflow items which directly or indirectly deliver an output necessary to have a complete input for said selected workflow item; and carrying out the actions corresponding to all identified workflow items to thereby carry out the computational task.

## Description

### FIELF OF THE INVENTION

The present invention relates to a workflow system, in particular to a workflow system which can be used to represent computational tasks by a workflow representation.

### DESCRIPTION OF THE RELATED ART

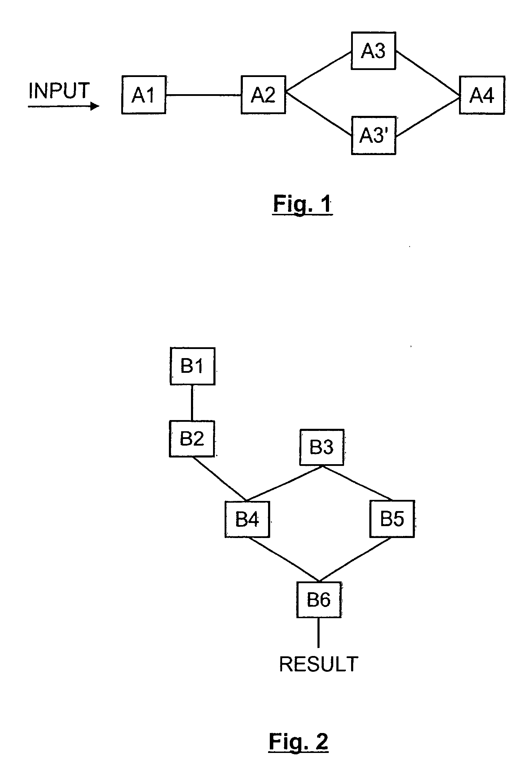

Workflow systems nowadays are a common tool, they are mainly used in corporations in order to automatize the actions which need to be taken in such corporations, such as the answering of letters, emails, etc. The known workflow systems follow a general approach which is schematically illustrated in the Figure 1.

The workflow as a tool is represented by a set of workflow items A1 to A4, where a workflow item corresponds to a certain action to be performed. Some input, such as an ingoing letter, is inputted to the first workflow item A1, where some action such as the scanning of the letter is performed. The next item, such as A2, may then carry out another action, such as the classification of the letter according to a classification scheme. In step A2, it may for example be decided whether or not the letter is either a debit note or e.g. an order letter. Depending on the classification step A2 then delivers an output to either step A3 or to step A3'. A3 may e.g. correspond to the processing of a debit note, such as the sending of the debit note to the accounting department. Then, in subsequent step A4 a confirmation letter confirming receipt of the debit note may be generated.

If the letter in step A2 has been classified as an order letter, then the workflow may proceed with step A3', delivering the order to the sales department, and then in step A4 based on the output of step A3' a confirmation letter may be generated confirming the receipt of the order, and possibly also indicating an expected date of shipment of the ordered item.

Basically all known workflow systems follow the approach schematically illustrated in Figure 1, which means that based on an input the workflow scheme is followed and the individual actions are taken. So far, a workflow system has not been applied for applications other than the processing of some input into a start workflow item.

In particular, workflow systems have not been used for the design of computer programs, since the classical workflow systems rely on a certain input and are designed to handle the input in an appropriate manner. The design of computer programs, however, usually relates to the generation of a desired output, therefore applying the classical workflow scheme is not suitable for the design of computer programs which should solve computational tasks which sometimes are quite complex.

The object of the present invention is therefore to provide an alternative approach for workflow systems which is also suitable to be applied for the design of computer programs which are to solve some computational tasks, rather than only handling input documents.

### SUMMARY OF THE INVENTION

The present invention in one of its aspects provides a method for executing a computational task to be carried out by one or more computer systems through a workflow scheme representing said task, wherein said task is represented by a set of workflow items, each workflow item representing an action, each workflow item receiving one or more inputs from other workflow items and delivering one or more outputs to other workflow items, thereby forming a workflow representation of said task, said method comprising identifying a workflow item delivering as an output the desired result of said task; tracing the workflow representation to identify all other workflow items which directly or indirectly deliver an output necessary to have a complete input for said selected workflow item; and carrying out the actions corresponding to all selected workflow items to thereby carry out the computational task.

This approach is fundamentally different from classical workflow schemes. Rather than using an input as a starting point and then deciding a workflow which is suitable to handle a certain input depending which actions need to be performed for an input, the present method starts from the result which is actually be achieved by a computational task. To such a result belongs a certain workflow item, which has one or more inputs. Those inputs then can be delivered form other workflow items, which again may receive their input from one or more other workflow items. Using such an organization scheme, a large computational task can be designed and represented by a workflow representation using a bottom-up approach rather than the classical top-down approach. This approach is particularly advantageous if the computational task finally is to be executed. Each workflow item may have one or more inputs, and it may deliver its output to one or more other workflow items. Rather than carrying out whole workflow scheme, only a part of the workflow scheme needs to be executed if an output of a workflow item which is located more in the top of the hierarchy of the workflow scheme is requested.

Moreover, by tracing the interconnections between the workflow items forming the workflow representation just those workflow items may be selected for execution which actually produce a necessary input for workflow items located more downwards in the hierarchy of the workflow representation.

This means that large computational tasks can be split up into individual sub-tasks represented by a fraction of the whole workflow system, such that only the workflow items belonging to such a fraction need to be executed to execute the sub-task.

Preferably the outputs of the individual workflow items are written into a file, such as a log-file, together with an annotation identifying the individual task or the individual result which has been requested. This makes e.g. a system recovery after a power failure very easy since a computational task has not to be carried out again as a whole, but rather only those workflow items for which no results have been yet written into a log-file need to be carried out, for the other workflow items the system may refer to the data written in the log-file.

Preferably the workflow representation as a whole is divided up into several parts which can be run in parallel, possibly on different computers or in different programming routines. This makes parallelization of large computational task very easy if the large computational task is represented through a workflow according to an embodiment of the present invention.

Further features and the advantages of the present invention will become apparent from the following detailed description in connection with the accompanying drawings.

### BRIEF DESCRIPTION OF THE DRAWINGS

Figure 1 schematically illustrates a workflow according to the prior art.
Figure 2 schematically illustrates a workflow according to an embodiment of the present invention.
Figure 3 schematically illustrates a flowchart for carrying out a workflow according to an embodiment of the present invention.
Figure 4 schematically shows the division of a workflow into two partial workflows according to an embodiment of the present invention.

### DETAILED DESCRIPTION

Figure 2 illustrates a workflow representation according to an embodiment of the present invention. The workflow as a whole consists of individual workflow items B1 to B6, each corresponding to a certain computational action, such as e.g. the access to a database, the execution of some processing of the inputs of the individual workflow, a combination of both, or the like. In general, each workflow item may represent any action which can be carried out by a computer systems or by a program running on a computer.

From Figure 2 it can be seen that a workflow item may require several inputs, such as item B4, which requires an input from workflow items B2 and B5. Also, each workflow item may deliver one or more outputs to one or more other workflow items, as e.g. B3 delivers an output to workflow items B4 and B5.

It will be readily apparent to the skilled person that such a workflow representation may be formed for each computational task, no matter how complex the task as a whole may be. With such a representation of a complex computational task through a workflow, several advantages as compared with the conventional defined methods of computer programs can be achieved.

Usually, computer programs follow a so-called top-down-approach, which means that based on some input individual programming steps are carried out to finally attain a certain output. With the workflow scheme depicted in Figure 2 a fundamentally different approach may be followed, depending on which result a user actually is interested in.

Assuming that a user is interested e.g. in the result which is obtained by executing workflow item B4, the system traces the workflow representation to find such workflow items which in terms of their hierarchy level are located above the workflow item B4 and which deliver a necessary input for finally obtaining the desired result. Thereby at first, workflow items B2 and B3 are identified, since they deliver the necessary inputs for workflow item B4. Thereafter, workflow item B1 is identified as delivering the necessary input for workflow item B2. Thereby, all workflow items which need to be carried out to obtain the result of workflow item B4 have been identified and the computational task consisting of workflow items B1, B2, B3 and B4 may be executed.

Thereby it should be noted that due to the particular results being requested, namely the output of B4, it is not necessary to carry out workflow items B5 and B6.

This means that for carrying out a certain computational task a workflow needs not to be carried out in full, but only fractions of a workflow which are necessary to obtain the desired output need to be carried out.

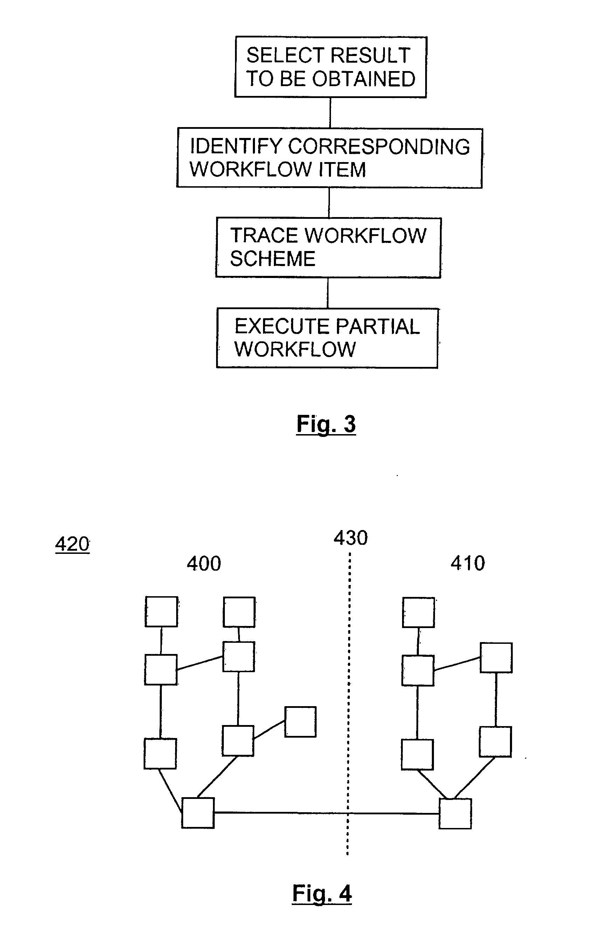

This is schematically illustrated through the flowchart shown in Figure 3. At first, a result is selected which is to be obtained, then a corresponding workflow item is identified. Thereafter, the workflow scheme is traced to obtain all other workflow items which deliver necessary input, either directly or indirectly, to carry out the selected workflow item. Finally, the partial workflow consisting of the so identified workflow items is carried out.

The tracing can be carried out as described before, namely by identifying for each workflow item the other workflow items which deliver an input to said workflow item. Iterating this procedure for each identified workflow item leads to a set of workflow items which form the partial workflow corresponding to the desired result.

If the workflow as a whole becomes more complex, then it can be divided up into partial workflows which are assigned to different processors or different computers, or which are assigned to different processing routines which can simultaneously be carried out on a operating system allowing for multi-tasking. This is schematically illustrated in Figure 4, which shows two partial workflows 400 and 410, which together form the overall workflow 420. The division of the overall workflow into two partial workflows is schematically illustrated by dashed line 430, the left hand part of the overall workflow may e.g. be carried out on a first processor or computer, and the right hand part may be carried out on another processor or computer. Thereby, large computational tasks can be easily distributed over multiple processors or multiple processing threads, thereby making parallelization particularly easy.

Preferably, the output of each workflow item is written into a file, such as a log-file, together with an identifier which identifies the particular task for which it was generated. This makes recovery after power failure very easy, since in such a case only those workflow items need to be executed for which no log-file has been generated yet. For the other workflow items reference can be made to log-file and the outputs stored therein.

Preferably, the generation of a workflow scheme as described before is facilitated by a graphical editing tool, which provides e.g. a tool for a easily arranging the individual workflow items and their interconnections by means of a mouse, drag-and-drop, etc. Predefined workflow items may be offered to a user, and the user may then arrange them as desired.

After the workflow representation itself has been generated, a user may assign to each workflow item the individual computational tasks carried out by the workflow item. For the purpose, there may be provided a pop-up window wherein e.g. some program code can be inserted directly, or wherein input and output parameters can be defined. With such a tool a workflow can be generated very easily.

Preferably, predefined routines or programs are provided to the user, such as frequently used database accesses, for which only the parameters still need to be defined, in order to complete the definition of a workflow item.

In Appendix 1 there is given an example for a workflow in the field of biology.

The example workflow contains three activities, each generating a single output. The input to this workflow is a set that contains query sequences to be used by the homology-search activity. The default output of the workflow is "alignment" data. The workflow engine runs to the default output if no output is explicitly requested when the workflow is executed.

The first activity, a homology-search, is a single step activity. This, using the parameters of the workflow, executes the application BLASTP for the workflow input-set. The result is a set of similarity hits. The step's inputs and parameters are linked to activity inputs and parameters respectively.

The second activity is a filtering activity, which gets the output of the homology-search activity as its input. It uses the iter option of the input data to iterate over the list of similarity objects and screen them on the basis of the match-length. This activity thus returns a reduced list of sequence objects.

The final activity is the alignment-activity, which gets a list of sequences filtered in the previous activity, and returns an alignment object. It is also a single step activity, which executes the application CLUSTALW and loads the result set into an object using the specified loader.

The foregoing example is particularly simple in so far as the used variables for the inputs and outputs of the individual activities are unique in this example. Therefore, the process of tracing the workflow to be executed is particularly simple in this example.

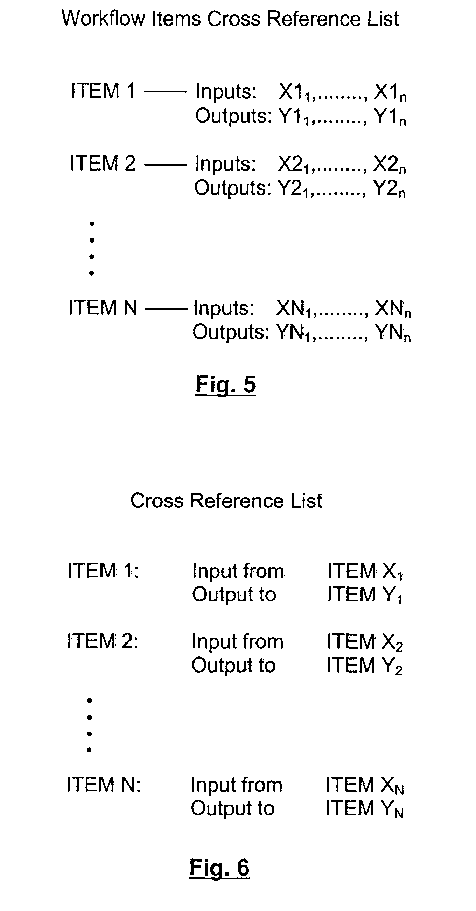

To enable more complex workflows and more complex structures of variables and individual workflow items, there may be provided a workflow items cross reference list as shown in Fig. 5. In Fig. 5 the individual workflow items are listed in a table showing for each item its necessary inputs as well as the outputs provided by the individual items. In Fig. 4 the inputs and outputs can refer to the names of variables, or they may refer to other workflow items. In the latter case, e.g. input X2₁ could for example refer to workflow item 1.

If such a cross reference list is given, then the tracing of the partial workflow to be executed is particularly easy since for a request to carry out a particular workflow item one can easily trace the inputs necessary for this workflow item which correspond to other workflow items. From those workflow items then the tracing can go further to determine then which inputs are needed for those workflow items and to which other workflow items those inputs correspond.

The structure of a workflow can then easily be generated by a graphical user interface which enables a user to define individual workflow items and to further define in which manner those workflow items are linked to other workflow items. This means that the user then defines from which other workflow item the particular workflow item receives its inputs, and to which other workflow item the particular workflow item delivers its outputs.

Rather than referring to variable names then the cross references for each workflow item would refer to other workflow items to which the individual workflow items are linked such that they either need an input from the other workflow item or that they deliver an output to the other workflow item. With such a workflow structure definition then the workflow as a whole is fully defined, and it further can be determined which partial workflow needs to be carried out if an individual output from a particular workflow item is requested.

Fig. 6 shows such a cross reference list where for each individual workflow item there is defined from which other workflow item it receives its inputs and to which other workflow item it delivers its outputs. Such a cross reference list may be generated by a graphical user interface in such a manner that individual boxes representing the workflow items can be linked to each other by lines or arrows, an arrow originating from item 1 and targeting item 2 having the meaning that item 1 delivers its output to item 2.

With such a workflow structure definition workflow generation becomes very easy, and the determination of a partial workflow to be executed if an output from an individual item is requested also becomes easily possible.

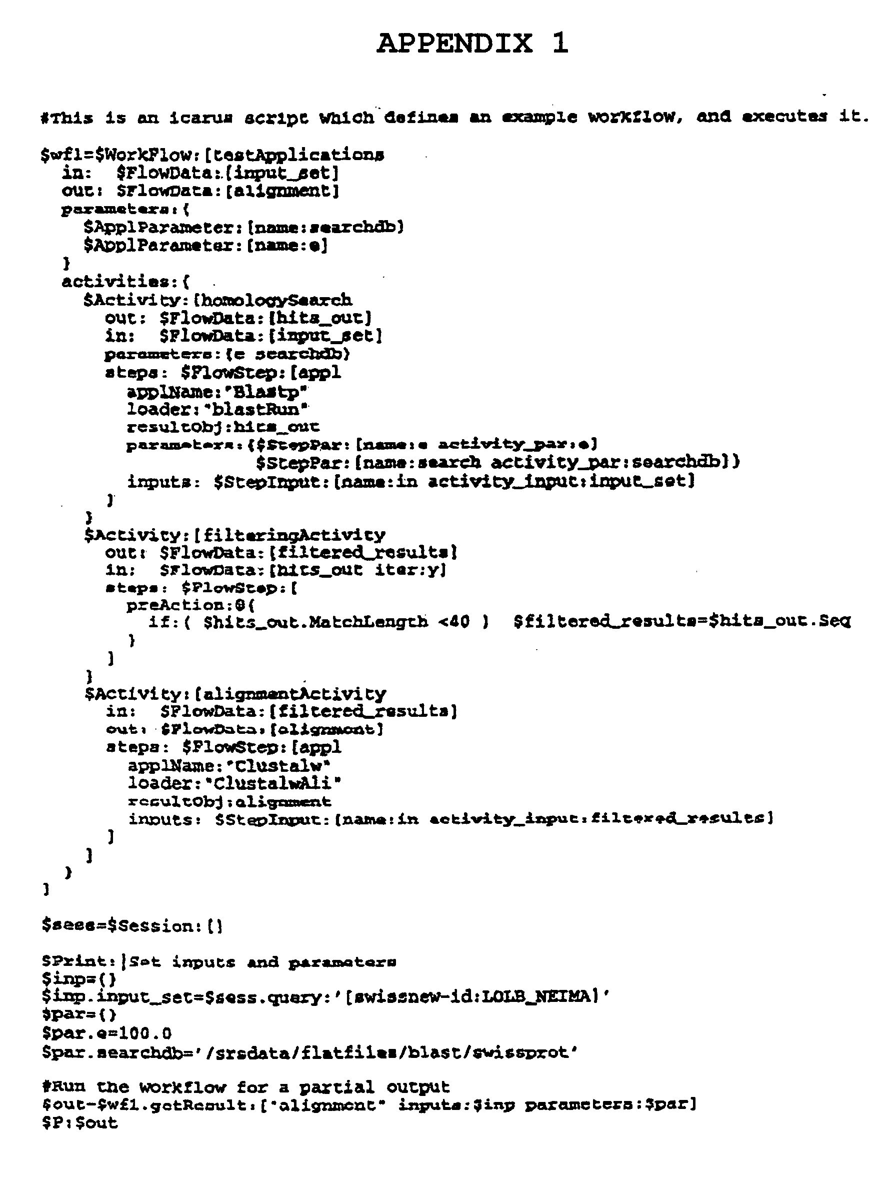

## Claims

1. A method for executing a task to be carried out by one or more computer systems through a workflow scheme representing said task, wherein
said task is represented by a set of workflow items, each workflow item representing an action, each workflow item receiving one or more inputs from other workflow items and delivering one or more outputs to other workflow items, thereby forming a workflow representation of said task, said method comprising:
identifying a workflow item delivering as an output the desired result of said task;
tracing the workflow representation to identify all other workflow items which directly or indirectly deliver an output necessary to have a complete input for said selected workflow item; and
carrying out the actions corresponding to all identified workflow items to thereby carry out the computational task.

2. The method according to claim 1, wherein said workflow representation is used to parallelize computational tasks to thereby enabling them being partly executed on different computer systems or by different routines.

3. The method according to one of claims 1 or 2, further comprising:
providing a graphical editing tool for generating the workflow representation of said computational task.

4. The method according to one of claims 1 to 3, further comprising:
writing the result of each workflow item into a file, together with an annotation identifying the computational task to which it belongs.

5. The method according to one of claims 1 to 4, further comprising:
in case of a re-run of said computational task being necessary, re-executing only those workflow items which have not yet been executed, and for those workflow items which already have been executed referring to the corresponding files into which the results have been written.

6. An apparatus comprising means for carrying out a method according to one of claims 1 to 5.

7. A computer program comprising computer-executable instructions for carrying out a method according to one of claims 1 to 5.
